# EUROPEAN PATENT SPECIFICATION

(11) **EP 0 226 347 B1**
(45) Date of publication and mention of the grant of the patent: **21.07.1993**
(21) Application number: 86309052.8
(22) Date of filing: 19.11.1986
(51) Int. Cl.: F16H 3/08, F16H 3/16

(54) **Multi-ratio power transmission**
Mehrstufiges Getriebe
Transmission de puissance à plusieurs vitesses

(30) Priority: 13.12.1985 US 808645
(43) Date of publication of application: 24.06.1987
(73) Proprietor: GENERAL MOTORS CORPORATION, Detroit Michigan 48202 (US)
(72) Inventor: Polak, James Casimir, Indianapolis Indiana 46222 (US)
(74) Representative: Denton, Michael John

(56) References cited:
- GB-A- 2 095 775
- GB-A- 2 156 455
- US-A- 4 488 446
- US-A- 4 513 631

## Description

This invention relates to preselected multi-ratio power transmissions as specified in the preamble of claim 1, for example as disclosed in US-A-4 488 446.

US-A-4 513 631 also discloses a preselected multi-ratio power transmission that permits both sequential and skip-shifting patterns, but achieves the skip-shifting patterns by the use of duplicate ratio gearing.

The present invention is concerned with the provision of a preselected multi-ratio power transmission that permits ratio skip-shifting without the need for duplicate ratio gearing, and specifically with the use of only one mechanically synchronised clutch assembly for the forward gear ratios.

To this end a preselected multi-ratio power transmission in accordance with the present invention is characterised over US-A-4 488 446 by the features specified in the characterising portion of claim 1.

In a preselected multi-ratio power transmission in accordance with the present invention, the number of forward gear ratios can if required be increased in pairs by the addition of, in respect of each pair, a single friction clutch and the appropriate ratio gear elements. However, even with the addition of two forward ratios, only the one mechanically synchronised clutch is required for the forward ratios.

It is thus within the scope of the present invention for an improved preselected multi-ratio power transmission to have three selectively engageable friction clutches, one mechanically synchronised clutch assembly and four pairs of ratio gears which are selectively operable in combination to provide five forward gear ratios.

It is also within the scope of the present invention for an improved preselected multi-ratio power transmission to have three selectively engageable friction clutches, two mechanically synchronised clutch assemblies, four pairs of ratio gears and a reverse idler gear which are selectively operable in combination to provide five forward gear ratios and one reverse ratio.

It is further within the scope of the present invention for an improved preselected multi-ratio power transmission to have a plurality of selectively engageable friction clutches, one mechanically synchronised clutch assembly and a plurality of pairs of ratio gears sufficient to provide forward ratios equal in number to one less than twice the number of the friction clutches, wherein the components are selectively operable in combination to provide an odd number of forward gear ratios in a manner which permits shifting to and across the centremost (central) forward ratio.

In the drawing:
Figure 1 is a schematic representation of a preferred embodiment of a preselected multi-ratio power transmission in accordance with the present invention; and
Figure 2 is a diagrammatic representation of an end view of a portion of the ratio gearing of the preselected multi-ratio power transmission shown in Figure 1.

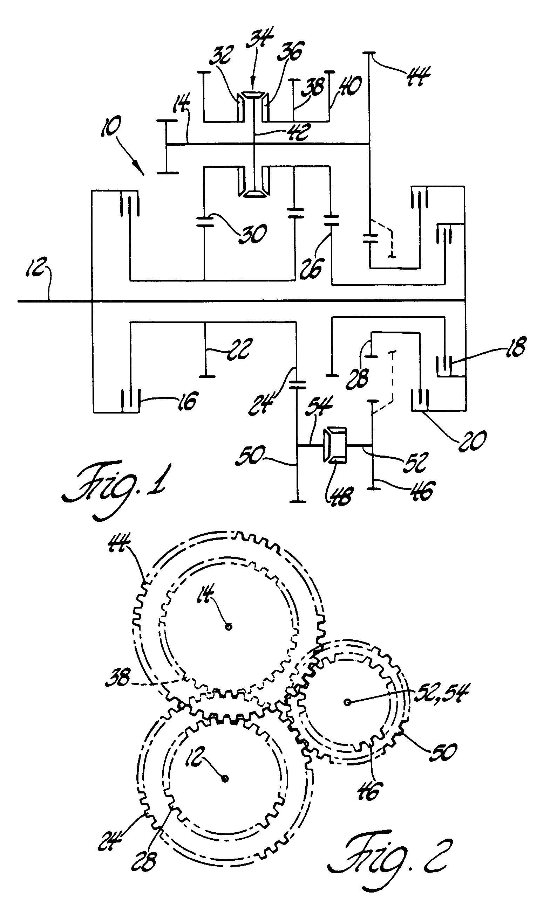

With reference now to the drawing, in which like characters represent like or corresponding parts in the respective views, there is seen in Figure 1 a preselected multi-ratio power transmission, generally designated 10, having an input shaft 12 and an output shaft 14. The input shaft 12 has operatively connected thereto three rotary friction clutches 16, 18 and 20.

The clutch 16 has drivingly connected thereto a pair of gear members 22 and 24; the clutch 18 has connected thereto a gear member 26; and the clutch 20 has drivingly connected thereto a gear 28.

The gear member 22 meshes with a gear 30 that is rotatably disposed on the output shaft 14 and is drivingly connected to one portion 32 of a mechanical synchroniser clutch 34. Another portion 36 of the synchroniser clutch 34 is connected to a pair of gears 38 and 40 that mesh with the gear members 24 and 26 respectively.

The output member 42 of the synchroniser clutch 34 is drivingly connected to the output shaft 14 and to a gear member 44 which meshes with the gear 28 and with a reverse idler gear 46. The reverse idler gear 46 is operatively connected by way of a single-sided mechanical synchroniser clutch 48 to another reverse idler gear 50 which meshes with the gear member 24. The reverse idler gears 46 and 50 are connected to respective idler shafts 52 and 54.

The friction clutches 16, 18 and 20 may be constructed in accordance with any of the well-known selectively engageable friction-type clutches, and may be engaged hydraulically, electrically or mechanically. The synchroniser clutches 34 and 48 may be constructed in accordance with the known synchroniser-type clutches, and may be actuated mechanically, electrically or hydraulically. Controls for such devices are well-known.

The friction clutches 16, 18 and 20 and the synchroniser clutch 34 can be selectively engaged in combination to provide five forward-drive speed ratios, as follows.

For first-ratio operation, the synchroniser clutch 34 is actuated to provide a drive relationship between the portion 32 thereof and the output shaft 14, thereby connecting the gear 30 to the output shaft 14. Selective engagement of the friction clutch 16 will then transmit driving torque from the input shaft 12 by way of the gear member 22 and gear to the output shaft 14, so providing the first, lowest forward drive ratio of the transmission.

For second-ratio operation, the friction clutches 16 and 18 are interchanged, by the use of any of the well-known clutch control mechanisms, such that drive torque from the input shaft 12 will be transmitted by way of the gear member 26 and gear 40, the gear member 38 and gear 24, and the gear member 22 and gear 30 to the output shaft 14.

For third-ratio operation, this being the centremost (central) drive ratio, the friction clutches 18 and 20 are interchanged such that the input torque at the input shaft 12 is delivered by way of the gear 28 and gear member 44 to the output shaft 14. During third-ratio operation, the synchroniser clutch 34 is torque-unloaded, such that free manipulation thereof is possible. During third-ratio operation, also, the synchroniser clutch 34 provides disengagement between the portion 32 thereof and the output shaft 14, and is moved into engagement to provide a driving connection between the portion 36 therof and the output shaft 14.

For fourth-ratio operation, after manipulation of the synchroniser clutch 34 the fourth-ratio drive is established by simultaneously interchanging the friction clutches 16 and 20. With the friction clutch 16 engaged, input torque is delivered by way of the gear member 24 and gear 38 to the output shaft 14.

For fifth-ratio operation, this being the highest forward gear ratio, the friction clutches 16 and 18 are interchanged. With the friction clutch 18 engaged, the input torque on the input shaft 12 is directed by way of the gear member 26 and gear 40 to the output shaft 14.

A reverse gear ratio is engaged with the vehicle stationary and the synchroniser clutch 34 in neutral by engaging the synchroniser clutch 48 and thereafter controllably engaging the friction clutch 16 such that forwardly directed input torque on the input shaft 12 is connected by way of the gear member 24 and the reverse idler gear 50, and the reverse idler gear 46 and gear member 44, to the output shaft 14. The reverse idler gears 50 and 46 provide for reversal of the direction of rotation between the input shaft 12 and the output shaft 14.

From the above description it will be evident that sequential shifting of the forward gear ratios, namely the first to the fifth ratio, is easily accomplished. This is a conventional shifting pattern. However, with the present invention, it is also possible to provide skip-shifting from the first ratio to the third ratio and to the fifth ratio in the following manner.

The synchroniser clutch 34 is actuated to engage the portion 32 thereof, and thereafter the friction clutch 16 is engaged to provide first-ratio operation. Selective interchange of the friction clutches 16 and 20 will then permit a skip-shift ratio change from first to third ratio. During third-ratio operation, the synchroniser clutch 34 can be manipulated to engage the portion 36 thereof, after which the friction clutches 20 and 18 may be interchanged to provide a skip-shift ratio change from third to fifth ratio. Downshifting direct from fifth ratio to third ratio, and then direct from third ratio to first ratio, can be accomplished by reversing the clutch interchanges.

In some instances it may be desirable to provide additional forward speed ranges. Additional forward speed ranges can be provided in pairs by the addition of a single friction clutch and gear member and an additional gear member that is made drivingly connectible to the synchroniser portion 36. The additional gear ratios may be obtained by selective engagement of the added friction clutch; depending on the position of the synchroniser clutch 34, the additional ratio will be either lower or higher than the centremost (central) ratio provided by the friction clutch 20 and the gear 28 and gear member 44.

The addition of a friction clutch will not inhibit the skip-shifting from a ratio below the central ratio to the central ratio and then skip-shifting above the central ratio. For example, in a seven-speed transmission, skip-shifting from first to fourth to sixth or seventh ratio may be accomplished, as may skip-shifting from second to fourth to sixth or seventh ratio.

From the above description it will be evident that the five speed-ratio transmission described is a basic element in providing a preselected skip-shifting multi-ratio power transmission. The addition of gear ratios to the transmission is readily accomplished, such that the overall transmission ratios can be expanded from five to seven to nine or more. The limiting factor of adding transmission ratios is in fact a physical one, determined by the volume (space) required for the transmission to fit into the vehicle.

Thus a family of transmissions can be provided by expanding the basic five-speed transmission described herein.

## Claims

1. A preselected multi-ratio power transmission in which input means (12) for transmitting drive forces; output means (14); first, second and third friction clutch means (16,18,20) each selectively engageable with the input means (12) for accepting drive forces therefrom; first input gear means (22,24) drivingly connected to the first friction clutch means (16); second input gear means (26) drivingly connected to the second friction clutch means (18); third input gear means (28) drivingly connected to the third friction clutch means (20); first output gear means (30) meshing with the first input gear means (22,24); second output gear means (38,40) meshing with the first (22,24) and second (26) input gear means; third output gear means (44) meshing with the third input gear means (28) and drivingly connected to the output means (14); and a synchroniser clutch (34) for selectively engaging the first output gear means (30) with the output means (14); the first friction clutch means (16) and the synchroniser clutch (34) co-operating during engagement to establish two drive ratios between the input (12) and output (14) means; the third friction clutch means (20) being engageable to provide another drive ratio between the input (12) and output (14) means which is numerically central of the said two drive ratios; characterised by reverse gear means (46,50) drivingly connected between the first input gear means (22,24) and the third output gear means (44) and including a selectively engageable mechanical clutch means (48); in that the synchroniser clutch (34) is alternately actuable to selectively engage the second output gear means (38,40) with the output means (14); in that the second friction clutch means (18) and the synchroniser clutch (34) when engaged co-operate to establish two other drive ratios between the input (12) and output (14) means, with said another drive ratio being numerically central of the said two other drive ratios; and in that the first friction clutch means (16) and the mechanical clutch means (48) are simultaneously engageable to establish a reverse drive ratio between the input (12) and output (14) means.

2. A preselected multi-ratio power transmission according to claim 1, characterised in that during the engagement of the third friction clutch means (20) the synchroniser clutch (34) is relieved of transmitting drive forces.

3. A preselected multi-ratio power transmission according to claim 1 or 2, characterised in that the third friction clutch means (20) is engageable to provide a numerically central drive ratio between the input means (12) and the output means (14), and the transmission ratio is arranged to be interchanged from first to second ratio by interchange of the first (16) and second (18) friction clutches without manipulation of the synchroniser clutch (34).

## Patentansprüche

1. Vorgewähltes mehrstufiges Getriebe mit einer Eingangseinrichtung (12) zum Übertragen der Antriebskräfte; einer Ausgangseinrichtung (14); einer ersten, zweiten und dritten Reibungskupplungsvorrichtung (16, 18, 20), wobei jede mit der Eingangseinrichtung (12) zum Aufnehmen der von dieser stammenden Antriebskräfte wahlweise einkuppelbar ist; ersten Eingangsgetriebeelementen (22, 24), die mit der ersten Reibungskupplungsvorrichtung (16) antriebsverbunden sind; einem zweiten Eingangsgetriebeelement (26), das mit der zweiten Reibungskupplungsvorrichtung (18) antriebsverbunden ist; einem dritten Eingangsgetriebeelement (28), das mit der dritten Reibungskupplungsvorrichtung (20) antriebsverbunden ist; einem ersten Ausgangsgetriebeelement (30), das mit den ersten Eingangsgetriebeelementen (22, 24) in Eingriff tritt; zweiten Ausgangsgetriebeelementen (38, 40), die mit den ersten (22, 24) und zweiten (26) Eingangsgetriebeelementen in Eingriff treten; einem dritten Ausgangsgetriebeelement (44), das mit dem dritten Eingangsgetriebeelement (28) in Eingriff tritt und mit der Ausgangseinrichtung (14) antriebsverbunden ist; und einer Synchronisationskupplung (34) zum wahlweisen Einkuppeln des ersten Ausgangsgetriebeelements (30) mit der Ausgangseinrichtung (14); wobei die erste Reibungskupplungsvorrichtung (16) und die Synchronisationskupplung (34) während der Einkupplung zusammenwirken, um zwei Übersetzungen zwischen der Eingangs- (12) und der Ausgangseinrichtung (14) herzustellen; die dritte Reibungskupplungsvorrichtung (20) einkuppelbar ist, um eine weitere Antriebsübersetzung zwischen der Eingangs- (12) und der Ausgangseinrichtungen (14) zu schaffen, die numerisch mittig zu den zwei Antriebsübersetzungen ist;
**gekennzeichnet** durch Rückwärtsgetriebeelemente (46, 50), die zwischen den ersten Eingangsgetriebeelementen (22, 24) und dem dritten Ausgangsgetriebeelement (44) antriebsverbunden sind und eine wahlweise einkuppelbare mechanische Kupplungsvorrichtung (48) umfassen, ferner dadurch gekennzeichnet, daß die Synchronisationskupplung (34) abwechselnd betätigbar ist, um die zweiten Ausgangsgetriebeelemente (38, 40) mit der Ausgangseinrichtung (14) wahlweise in Eingriff zu bringen; daß die zweite Reibungskupplungsvorrichtung (18) und die Synchronisationskupplung (34) zusammenwirken, wenn sie eingekuppelt sind, um zwei andere Antriebsübersetzungen zwischen der Eingangs- (12) und der Ausgangseinrichtung (14) festzulegen, wobei die weitere Antriebsübersetzung numerisch mittig zu den zwei anderen Antriebsübersetzungen liegt; und daß die erste Reibungskupplungsvorrichtung (16) und die mechanische Kupplungsvorrichtung (48) simultan einkuppelbar sind, um ein umgekehrtes Antriebsverhältnis zwischen der Eingangs- (12) und der Ausgangs-einrichtung (14) festzulegen.

2. Vorgewähltes mehrstufiges Getriebe nach Anspruch 1,
dadurch **gekennzeichnet,**
daß während des Einkuppelns der dritten Reibungskupplungsvorrichtung (20) die Synchronisationskupplung (34) von den Übertragungsantriebskräften befreit ist.

3. Vorgewähltes mehrstufiges Getriebe nach Anspruch 1 oder 2,
dadurch **gekennzeichnet,**
daß die dritte Reibungskupplungsvorrichtung (20) einkuppelbar ist, um ein numerisch mittiges Übersetzungsverhältnis zwischen der Eingangseinrichtung (12) und der Ausgangseinrichtung (14) zu schaffen, und die Getriebe-Übersetzung so ausgebildet ist, daß sie von der ersten zur zweiten Übersetzung durch gegenseitiges Austauschen der ersten (16) und zweiten (18) Reibungskupplungen ohne Beeinflußung der Synchronisationskupplung (34) wechselt.

## Revendications

1. Transmission présélective de puissance à plusieurs vitesses, comprenant des moyens d'entrée (12) destinés à transmettre des forces motrices; des moyens de sortie (14); des premier, deuxième et troisième moyens d'embrayages (16, 18, 20) à friction pouvant être amenés chacun, de façon sélective, en engagement avec les moyens d'entrée (12) de manière à recevoir des forces motrices transmises par ceux-ci; des premiers moyens d'engrenages (22, 24) d'entrée en liaison d'entraînement avec le premier moyen d'embrayage (16) à friction; un second moyen d'engrenage (26) d'entrée en liaison d'entraînement avec le deuxième moyen d'embrayage (18) à friction; un troisième moyen d'engrenage (28) d'entrée en liaison d'entraînement avec le troisième moyen (20) d'embrayage; un premier moyen d'engrenage (30) de sortie en engrènement avec les premiers moyens d'engrenages (22, 24) d'entrée; des seconds moyens d'engrenages (38, 40) de sortie en engrènement avec les premier (22, 24) et second (26) moyens d'engrenage d'entrée; un troisième moyen d'engrenage (44) de sortie en engrènement avec le troisième moyen d' engrenage (28) d'entrée et en liaison d'entraînement avec les moyens de sortie (14); et un embrayage (34) de synchronisation destiné à amener de façon sélective le premier moyen d'engrenage (30) de sortie en engagement avec les moyens de sortie (14); le premier moyen d'embrayage (16) à friction et l'embrayage (34) de synchronisation coopérant lors de l'engagement de manière à établir deux rapports d'entraînement entre les moyens d'entrée (12) et les moyens de sortie (14); le troisième moyen d'embrayage (20) pouvant être engagé de manière à fournir un autre rapport d'entraînement entre les moyens d'entrée (12) et les moyens de sortie (14), rapport qui se situe mathématiquement au milieu entre lesdits deux rapports d'entraînement;
caractérisée par des moyens de marche arrière (46, 50) en liaison d'entraînement avec les premiers moyens d'engrenages (22, 24) d'entrée et le troisième moyen d'engrenage (44) de sortie, ces moyens comprenant un moyen d'embrayage mécanique (48) pouvant être engagé de façon sélective;
en ce que l'embrayage (34) de synchronisation peut être actionné alternativement de manière à amener, de façon sélective, les seconds moyens d'engrenage (38, 40) de sortie en engagement avec les moyens de sortie (14);
en ce que le deuxième moyen d'embrayage (18) à friction et l'embrayage (34) de synchronisation coopèrent l'un avec l'autre, lorsqu'ils sont engagés, de manière à établir deux autres rapports d'entraînement entre les moyens d'entrée (12) et les moyens de sortie (14), ledit autre rapport d'entraînement se situant mathématiquement au milieu entre lesdits deux autres rapports d'entraînement;
et en ce que le premier moyen d'embrayage (16) à friction et le moyen d'embrayage mécanique (48) peuvent être engagés simultanément de manière à établir un rapport de marche arrière entre les moyens d'entrée (12) et les moyens de sortie (14).

2. Transmission présélective de puissance à plusieurs vitesses selon la revendication 1, caractérisée en ce que, pendant que le troisième moyen d'embrayage (20) à friction est engagé, l'embrayage (34) de synchronisation ne transmet plus de forces motrices.

3. Transmission présélective de puissance à plusieurs vitesses selon l'une des revendications 1 ou 2, caractérisée en ce que le troisième moyen d'embrayage (20) à friction peut être engagé de manière à établir un rapport d'entraînement entre les moyens d'entrée (12) et les moyens de sortie (14) constituant mathématiquement un rapport médian, et en ce que les rapports de transmission sont agencés de façon que l'on puisse passer de la première vers la deuxième vitesse par la permutation du premier moyen d'embrayage (16) et du deuxième moyen d'embrayage (18) sans manipulation de l'embrayage (34) de synchronisation.
